# EUROPEAN PATENT SPECIFICATION

(11) **EP 4 390 608 B1**
(45) Date of publication and mention of the grant of the patent: **20.05.2026**
(21) Application number: 23218263.4
(22) Date of filing: 19.12.2023
(51) Int. Cl.: G05D 23/19, F24F 11/00, F24F 11/47, F24F 11/58, F24F 11/64, F24F 120/10, F24F 120/20, F24F 130/10, F24F 140/50, F24F 140/60

(54) **CONTROLLING ENERGY LOADS TO MEET AN ENERGY BUDGET ASSIGNED TO A SITE**
STEUERUNG VON ENERGIELASTEN ZUR ERFÜLLUNG EINES EINEM STANDORT ZUGEORDNETEN ENERGIEBUDGETS
COMMANDE DE CHARGES ÉNERGÉTIQUES POUR SATISFAIRE UN BUDGET ÉNERGÉTIQUE ATTRIBUÉ À UN SITE

(30) Priority: 22.12.2022 US 202263434519 P
(43) Date of publication of application: 26.06.2024
(73) Proprietor: Carrier Corporation, Palm Beach Gardens, FL 33418 (US)
(72) Inventor: MANNFELD, David, Indianapolis, IN 46204 (US)
(74) Representative: Dehns

(56) References cited:
- US-A1- 2019 378 020
- US-A1- 2021 216 902
- US-A1- 2022 253 078
- GENG LONGLING ET AL: "Evaluation of Smart Home Systems and Novel UV-Oriented Solution for Integration, Resilience, Inclusiveness & Sustainability", 2022 6TH INTERNATIONAL CONFERENCE ON UNIVERSAL VILLAGE (UV), IEEE, 22 October 2022 (2022-10-22), pages 1 - 386, XP034383551, DOI: 10.1109/UV56588.2022.10185519

## Description

### BACKGROUND

The present disclosure relates in general to programmable computers operable to control energy loads such as a heating, ventilation and air conditioning (HVAC) system to meet an energy demand budget assigned to a site.

Energy providers offer so-called "demand response" (DR) programs that offer incentives to customers for reducing their energy usage when the demand for energy (e.g., electricity) is high. During such high demand periods, an energy service provide can call a DR "event," which means the energy service provider will asked or remotely signaled to reduce energy usage. In return, the customer can receive compensation in the form of bill credits, a reduced rate, or other forms of compensation.

Open Automated Demand Response (Open-ADR) is a research and standards development effort for energy management led by North American research labs and companies. The typical use is to implement a DR by sending information and signals directly to a customer's energy management system (EMS) - a "smart" network that controls and communicates with a customer's equipment - to cause the customer's electrical power-using devices to be placed in a mode that consumes less energy during DR "events," peak-demand pricing, or emergencies.

US 2022/0253078 A1 discloses a system for monitoring energy use habits of consumers wherein an energy model is generated and used to generate a duty-cycle for turning an HVAC system off and on.

US 2019/0378020 A1 discloses a building energy system wherein one or more pieces of building equipment are operated based on a predictive building model.

US 2021/0216902 A1 discloses techniques regarding determining hyperparameters for a differentially private federated learning process.

### BRIEF DESCRIPTION

According to a first aspect of the invention there is provided a thermostat of a heating, ventilation and air conditioning (HVAC) system, the thermostat comprising a controller operable to perform operations comprising: receiving an energy budget for a site, the energy budget comprising an allocated maximum total energy usage by energy loads of the site over a predetermined time duration; generating an energy usage forecast for the energy loads over the predetermined time duration; and based at least in part on a determination that the energy usage forecast exceeds the energy budget, generating an energy usage reduction plan; wherein the energy usage reduction plan comprises instructions operable to control one or more of the energy loads such that an actual total energy usage by the energy loads over the predetermined time duration does not exceed the energy budget; wherein the energy loads include the HVAC system; and wherein the controller uses the actual energy usage to update the energy usage forecast and perform additional iterations of the energy usage forecast and energy budget comparison to determine whether the energy usage reduction plan is working.

Optionally, the operations further including monitoring the actual energy usage at the site during the predetermined time duration.

Optionally, the instructions control the one or more of the energy loads to draw energy from a local energy source of the site.

Optionally, the energy usage reduction plan is based at least in part on an occupancy of the site.

Optionally, the energy usage reduction plan is based at least in part on an assessment of a comfort level of occupants of the site.

Optionally, the energy usage reduction plan is based at least in part on local site information selected from the group consisting of a size of the site; a forecasted weather condition at the site; a capacity of at least one of the energy loads; a usage schedule of the at least one of the energy loads; a temperature set point of the thermostat operable to control the at least one of the energy loads; and one or more user constraints.

Optionally, the controller being operable to utilize a machine learning algorithm that includes a machine learning model of the site and the energy loads.

Optionally, the machine learning algorithm being operable to generate the energy usage forecast and the energy usage reduction plan.

Optionally, the controller being a member of a federated learning system; and the machine learning model is trained using the federated learning system.

According to a second aspect of the invention there is provided a method of operating a controller of a thermostat of a heating, ventilation and air conditioning (HVAC) system, wherein the method operates the controller to: receive an energy budget for a site, the energy budget comprising an allocated maximum total energy usage by energy loads of the site over a predetermined time duration; generate an energy usage forecast for the energy loads over the predetermined time duration; and based at least in part on a determination that the energy usage forecast exceeds the energy budget, generate an energy usage reduction plan; wherein the energy usage reduction plan comprises instructions operable to control one or more of the energy loads such that an actual total energy usage by the energy loads over the predetermined time duration does not exceed the energy budget; wherein the energy loads include the HVAC system; and wherein the method operates the controller to use the actual energy usage to update the energy usage forecast and perform additional iterations of the energy usage forecast and energy budget comparison to determine whether the energy usage reduction plan is working.

Optionally, the method further includes operating the controller to monitor the actual energy usage at the site during the predetermined time duration.

Optionally, the instructions control the one or more of the energy loads to draw energy from a local energy source of the site.

Optionally, the energy usage reduction plan is based at least in part on an occupancy of the site.

Optionally, the energy usage reduction plan is based at least in part on an assessment of a comfort level of occupants of the site.

Optionally, the energy usage reduction plan is based at least in part on local site information selected from the group consisting of: a size of the site; a forecasted weather condition at the site; a capacity of at least one of the energy loads; a usage schedule of the at least one of the energy loads; a temperature set point of the thermostat operable to control the at least one of the energy loads; and one or more user constraints.

Optionally, the controller is operable to utilize a machine learning algorithm that includes a machine learning model of the site and the energy loads.

Optionally, the machine learning algorithm is operable to generate the energy usage forecast and the energy usage reduction plan.

Optionally, the controller is a member of a federated learning system; and the machine learning model is trained using the federated learning system.

### BRIEF DESCRIPTION OF THE DRAWINGS

Certain exemplary embodiments will now be described in greater detail by way of example only with reference to the accompanying drawings, in which like elements are numbered alike:
FIG. 1 is a simplified block diagram of a system having a controller operable to control energy loads to meet an energy budget assigned to a site
FIG. 2 is a simplified block diagram of a system having a controller operable to control energy loads to meet an energy budget assigned to a site;
FIG. 3 is a flow diagram illustrating a computer-implemented method;
FIG. 4 is a simplified block diagram illustrating a classifier;
FIG. 5 is a simplified block diagram of a learning phase that can be used to train the classifier shown in FIG. 4;
FIG. 6 is a simplified block diagram illustrating a federated learning system; and
FIG. 7 is a block diagram of a programmable computer system.

### DETAILED DESCRIPTION

Embodiments of the present invention provide computer systems, computer-implemented methods, and computer program products operable to address a DR in the form of an energy budget for a site that allocates a maximum total energy usage to a site over a predetermined time duration. In embodiments, the energy usage can cover a variety of energy forms generated by a variety of energy sources, including, for example, electricity, natural gas, light, and the like. According to an embodiment of the invention, a controller receives an energy budget for a site, the energy budget including an allocated maximum total energy usage by energy loads of the site over a predetermined time duration. An energy usage forecast for the energy loads over the predetermined time duration is generated, and, based at least in part on a determination that the energy usage forecast exceeds the energy budget, an energy usage reduction plan is created and implemented. The energy usage reduction plan includes instructions that control one or more of the energy loads such that an actual total energy usage by the energy loads over the predetermined time duration does not exceed the energy budget.

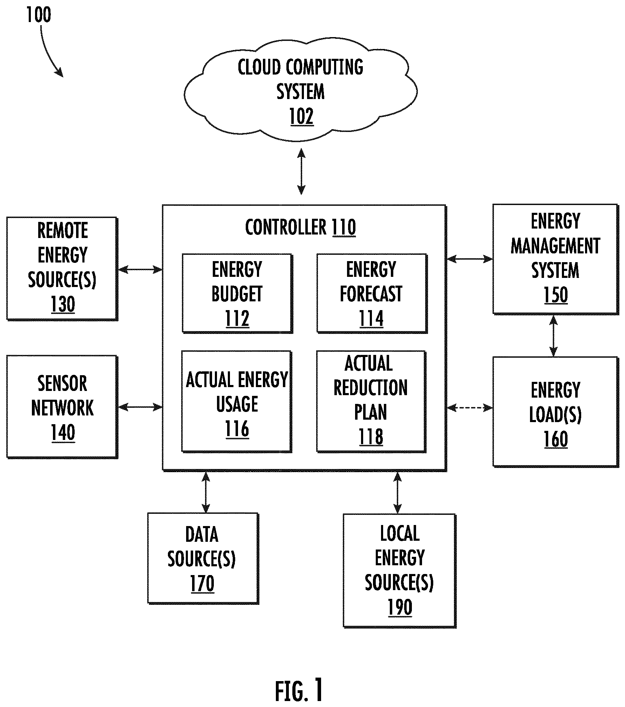

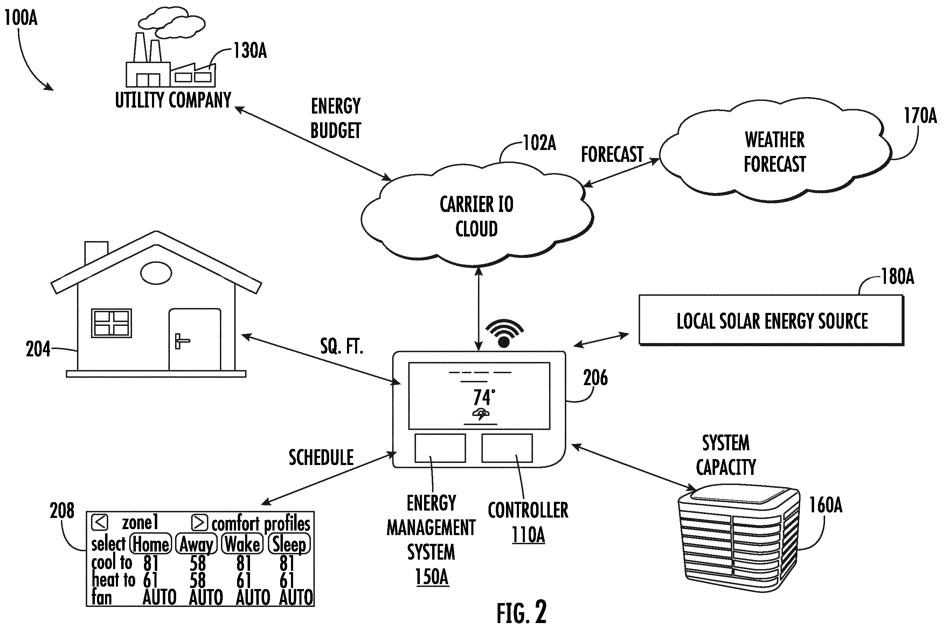

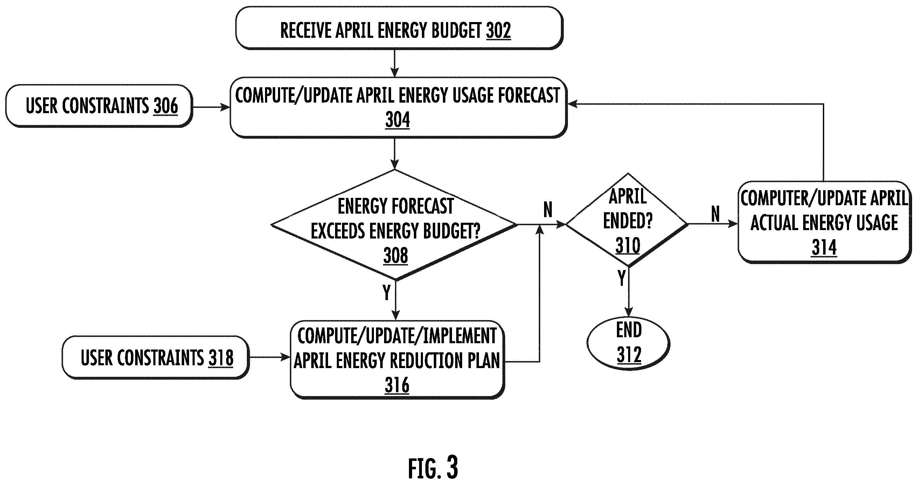

FIG. 1 is a simplified block diagram of a system 100 having a controller 110 operable to, in accordance with an embodiment, control energy loads 160 to meet an energy budget 112 assigned to a site 204 (shown in FIG. 2) by a remote energy source 130 (e.g., a utility service provider). In some embodiments, the controller is integrated into an existing controller of the energy loads 160, including, for example a thermostat that controls temperature settings of certain energy loads 160 such as HVAC systems and/or water heating systems. In embodiments of the invention, the energy budget 112 allocates a maximum total energy usage to a site over a predetermined time duration. The controller 110 is operable to perform the methodology 300 depicted in FIG. 3 to receive the energy budget 112, generate or predict an energy forecast 114 for the site 204 over the predetermined time duration, and compare the energy budget 112 to the energy forecast 114 to determine whether nor not the site 204 will stay within the energy budget 204 over the predetermined time duration.

In embodiments of the invention, the energy forecast 114 is generated or predicted using machine learning algorithms 412 and models 416 (e.g., a model of the site 204 (shown in FIG. 2) and/or a model of one or more of the energy loads 160) trained using various data sources 170, data from an energy management system 150 of the site 204, and input from a sensor network 140 that measures events at the site 204. For example, the sensor network 140 can provide data about whether or not the site 204 is occupied, as well as data about the comfort level being experienced by the occupants of the site 204. In accordance with embodiments of the invention, the term site can include, but is not limited to, office buildings, manufacturing locations, warehouse areas, homes, apartments, or any types of areas that utilize electricity. The energy management system 150 includes a transceiver that is operable to send and receive information to and from the controller 110, the remote energy source 130, and/or a cloud computing system 102. The energy management system 150 is operable to manage one or more of the energy loads 160 and the local energy sources 180 within the site 204. In the example case of buildings, the energy loads 160 can include but are not limited to, HVAC systems, water heaters, power storage system, renewable energy generation systems, lighting systems, elevator systems, large machine systems, and the like.

In some embodiments of the invention, the controller 110 generates an energy reduction plan 118 when the comparison between the energy budget 112 and the energy forecast 114 indicates that the site 204 will not stay within the energy budget 204 over the predetermined time duration. The energy usage reduction plan 118 includes instructions that control (e.g., through the energy management system 150) one or more of the energy loads 160 such that an actual total energy usage 116 by the energy loads over the predetermined time duration does not exceed the energy budget 112. As described in greater detail in connection with the description of the methodology 300 (shown in FIG. 3), the actual energy usage 116 is also used to update the energy forecast 114 and perform additional iterations of the energy forecast 114 and energy budget 112 comparison to determine whether the energy reduction plan 118 is working.

The cloud computing system 102 can be in wired or wireless electronic communication with one or all of the components of the system 100. Cloud computing system 102 can supplement, support, or replace some or all of the functionality of the components of the system 100. Additionally, some or all of the functionality of the components of the system 100 can be implemented as a node of the cloud computing system 102.

FIG. 2 is a simplified block diagram of a system 110A having a controller 110A operable to, in accordance with an embodiment, control energy loads to meet an energy budget (e.g., energy budget 112 shown in FIG. 1) assigned to a site 204. The system 110A performs substantially the same as the system 110 except additional detail are provided about the system 110A. More specifically, in the system 110A, the controller 110A and the energy management system 150A are incorporated within a thermostat 206 that controls an HVAC system 160A of the site 204. A schedule 208 has been programmed into the thermostat 206, where the schedule programs the temperature settings of the HVAC system 160A. For example, during winter months the schedule 208 can be programmed by a user to instruct the emergency management system 150A to automatically reduce the temperature of the HVAC system 160A to 70 degrees Fahrenheit during the hours (e.g., 10:00pm to 8:00am) when the occupants of the site 204 are sleeping. As another example, during a one-week winter vacation taken by the occupants of the site 204, the schedule 208 can be programmed by a user to instruct the emergency management system 150A to automatically maintain the temperature of the HVAC system 160A at 60 degrees Fahrenheit during the entire time the occupants of the site 204 are away from the site 204 and on vacation. As another example, the schedule 208 can be programmed by a user to instruct the emergency management system 150A to automatically maintain the temperature of the HVAC system 160A at 60 degrees Fahrenheit during winter months when all of the occupants of the site 204 are at work or school (e.g., between 8:00am and 3:30pm). Continuing with a description of how the system 100A compares with the system 100 (shown in FIG. 1), the remote energy source 130 can be a utility company 130A; the remote data source 170 can be a weather forecast 170A; and the local energy source 180 can be a local solar energy source/system 180A.

FIG. 3 is a flow diagram illustrating a methodology 300 in accordance with embodiments. The methodology 300 is implemented by controllers 110, 110A (shown in FIGS. 1 and 2) in communication with the components of the system 100, 100A (shown in FIGS. 1 and 2) to control energy loads 160, 160A (shown in FIGS. 1 and 2) to meet an energy demand budget (e.g., energy budget 112 shown in FIG. 1) assigned to a site (e.g., site 204 shown in FIG. 2). The methodology 300 begins at block 302 where the controller 110, 110A receives an energy budget for a site (e.g., site 204). The energy budget includes an allocated maximum total energy usage by energy loads of the site over a predetermined time duration. In the example depicted in FIG. 3, the time duration is a month, and the particular month covered by the time duration is April. However, in embodiments of the invention other time durations can be used. For example, the time duration can be from 4pm through 8pm on an upcoming Wednesday evening. In embodiments, the energy budget is received at block 302 sufficiently in advance of the energy budget's time duration to allow the methodology 300 to be performed, and particularly to allow the operations at block 304 to be performed. For example, the energy budget can be received at block 302 on a Tuesday evening, and the time duration of the energy budget can be the following day, Wednesday, from 4pm through 8pm. Accordingly, in embodiments, the time duration of the energy budget happens subsequently to the energy budget being received at the controller 110, 110A.

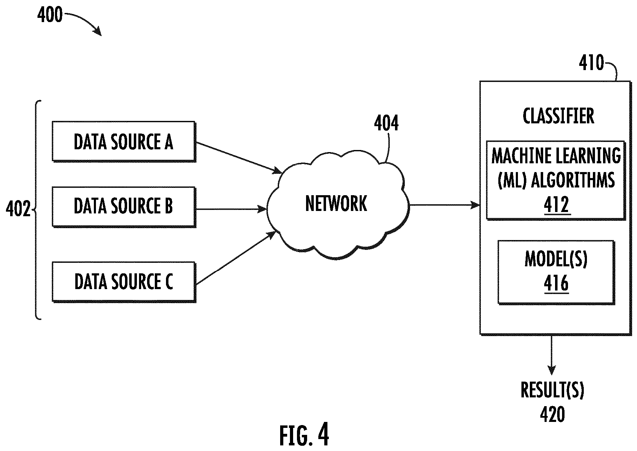

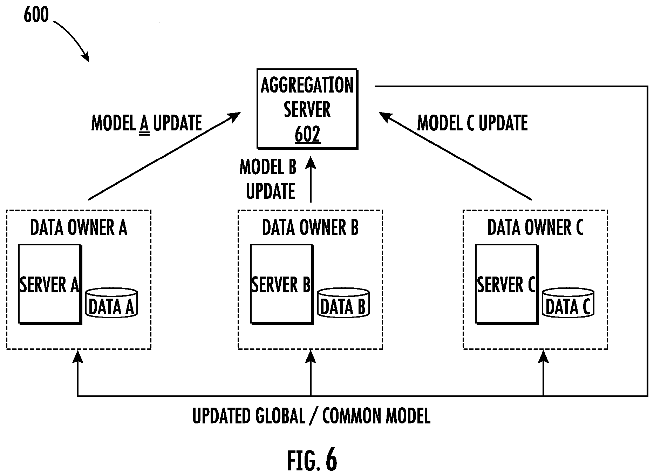

At block 304, the methodology 300 uses the energy budget received at block 302 and user constraints accessed or entered at block 306 to compute and/or update a forecast (or prediction) of the energy usage that will occur at the site 204 in April. The user constraints at block 306 can be any user preference input to the system 100, 100A (shown in FIGS. 1 and 2). For example, the user constraints can be the load operation schedule 208 (shown in FIG. 2) entered at the smart thermostat 206 (shown in FIG. 2) to control energy loads (e.g., lighting, HVAC, water heaters, and the like) based on user preference and/or user occupancy at the site 204. In another example the user constraint can be a preference to use the local energy sources 180, 180A (shown in FIGS. 1 and 2) as often as possible. In embodiments of the invention, the operations at block 304 can be performed using machine learning algorithms 412 and models 416 (shown in FIG. 4) trained to compute and/or update the forecast (or prediction) of the energy usage that will occur in April at the site. In some embodiments of the invention, the machine learning algorithms 412 and models 416 can be trained in a federated learning system 600 (shown in FIG. 6).

From block 304, the methodology 300 moves to decision block 308 and determines whether or not the computed/updated energy usage exceeds the energy budget. If the answer to the inquiry at decision block 308 is no, the methodology 300 moves to decision block 310 to determine whether the predetermined time duration (e.g., April) has ended. If the answer to the inquiry at decision block 310 is yes, the methodology 300 moves to block 312 and ends. If the answer to the inquiry at decision block 310 is no, the methodology 300 moves to block 314 and computes or updates the actual energy usage at the site 204 to-date and returns to block 306 to compute and update the energy forecast taking into account the actual energy usage to-date. If the answer to the inquiry at decision block 308 is yes, the methodology 300 moves to block 316 and computes/updates/implements an energy reduction plan operable to include instructions (e.g., issued through the energy management system 150, 150A shown in FIGS. 1 and 2) that control one or more of the energy loads 160, 160A such that an actual total energy usage by the energy loads 160, 10A over the predetermined time duration (e.g., April) does not exceed the energy budget. The operations at block 318 incorporate user constraints into the operations at block 316. In some embodiments of the invention, the user constraints accessed or generated at block 318 can be the same as the user constraints accessed or generated at block 306. In some embodiment of the invention, the user constraints accessed or generated at block 318 can be constraints targeted specifically for how the emergency reduction plan is computed/updated/implemented. For example, the user can have difficulty sleeping in warmer temperatures so can define for block 318 a constraint that the computed/updated/implemented energy reduction plan cannot raise HVAC temperatures above 75 degrees Fahrenheit when the outdoor temperature is above 75 degrees Fahrenheit during the hours between 9:30 pm and 8:00am (i.e., the hours when the user sleeps) unless the system 100, 100A determines that the site 204 is not occupied.

In embodiments of the invention, the operations at block 316 can be performed using machine learning algorithms 412 and models 416 (shown in FIG. 4) trained to compute and/or update the energy reduction plan. In some embodiments of the invention, the machine learning algorithms 412 and models 416 can be trained in a federated learning system 600 (shown in FIG. 6).

From block 316, the methodology 300 returns to the input to decision block 310 to determine whether the predetermined time duration (e.g., April) has ended. If the answer to the inquiry at decision block 310 is yes, the methodology 300 moves to block 312 and ends. If the answer to the inquiry at decision block 310 is no, the methodology 300 moves to block 314 and computes or updates the actual energy usage at the site 204 to-date and returns to block 306 to compute and update the energy forecast taking into account the actual energy usage to-date determined at block 314 and the energy reduction plan determined at block 316.

Additional details of machine learning techniques that can be used to implement functionality of the controller 110, 110A will now be provided. The various classification, prediction and/or determination functionality of the controllers or processors described herein can be implemented using machine learning and/or natural language processing techniques. In general, machine learning techniques are run on so-called "learning machines," which can be implemented as programmable computers operable to run sets of machine learning algorithms and/or natural language processing algorithms. Machine learning algorithms incorporate knowledge from a variety of disciplines, including neurophysiology, cognitive science/psychology, physics (statistical mechanics), control theory, computer science, artificial intelligence, statistics/mathematics, pattern recognition, computer vision, parallel processing and hardware (e.g., digital/analog/VLSI/optical).

The basic function of learning machines and their machine learning algorithms is to recognize patterns by interpreting unstructured sensor data through a kind of machine perception. Unstructured real-world data in its native form (e.g., images, sound, text, or time series data) is converted to a numerical form (e.g., a vector having magnitude and direction) that can be understood and manipulated by a computer. The machine learning algorithm performs multiple iterations of learning-based analysis on the real-world data vectors until patterns (or relationships) contained in the real-world data vectors are uncovered and learned. The learned patterns/relationships function as predictive models that can be used to perform a variety of tasks, including, for example, classification (or labeling) of real-world data and clustering of real-world data. Classification tasks often depend on the use of labeled datasets to train the classifier (i.e., the model) to recognize the correlation between labels and data. This is known as supervised learning. Examples of classification tasks include identifying objects in images (e.g., stop signs, pedestrians, lane markers, etc.), recognizing gestures in video, detecting voices, detecting voices in audio, identifying particular speakers, transcribing speech into text, and the like. Clustering tasks identify similarities between objects, which the clustering task groups according to those characteristics in common and which differentiate them from other groups of objects. These groups are known as "clusters."

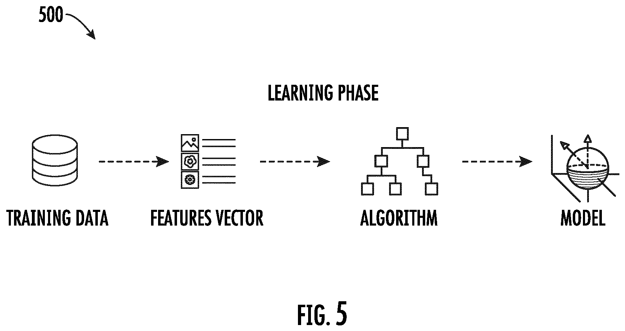

An example of machine learning techniques that can be used to implement embodiments of the invention will be described with reference to FIGS. 4 and 5. FIG. 4 depicts a block diagram showing a classifier system 400 capable of implementing various predicting and determining aspects of the embodiments described herein. More specifically, the functionality of the system 400 is used in embodiments of the invention to generate various models and/or sub-models that can be used to implement predicting and determining functionality in embodiments of the invention. The classifier system 400 includes multiple data sources 402 in communication (e.g., through a network 404) with a classifier 410. In some embodiments of the invention, the data sources 402 can bypass the network 404 and feed directly into the classifier 410. The data sources 402 provide data/information inputs that will be evaluated by the classifier 410 in accordance with embodiments of the invention. The data sources 402 also provide data/information inputs that can be used by the classifier 410 to train and/or update model(s) 416 created by the classifier 410. The data sources 402 can be implemented as a wide variety of data sources, including but not limited to, sensors operable to gather real time data, data repositories (including training data repositories), and outputs from other classifiers. The network 404 can be any type of communications network, including but not limited to local networks, wide area networks, private networks, the Internet, and the like.

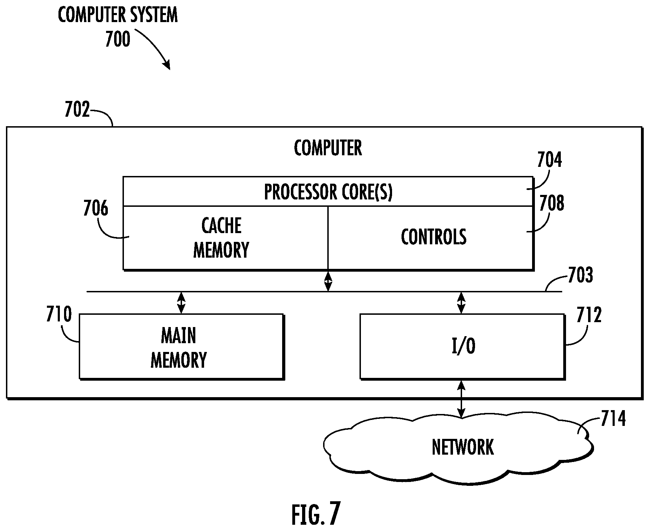

The classifier 410 can be implemented as algorithms executed by a programmable computer such as the computing system 700 (shown in FIG. 7). As shown in FIG. 4, the classifier 410 includes a suite of machine learning (ML) algorithms 412; and model(s) 416 that are relationship (or prediction) algorithms generated (or learned) by the ML algorithms 412. The algorithms 412, 416 of the classifier 410 are depicted separately for ease of illustration and explanation. In embodiments of the invention, the functions performed by the various algorithms 412, 416 of the classifier 410 can be distributed differently than shown. In some embodiments of the invention, natural language processing (NLP) algorithms can be integrated within the ML algorithms 412.

Referring now to FIGS. 4 and 5 collectively, FIG. 5 depicts an example of a learning phase 500 performed by the ML algorithms 412 to generate the above-described models 416. In the learning phase 500, the classifier 410 extracts features from the training data and coverts the features to vector representations that can be recognized and analyzed by the ML algorithms 412. The features vectors are analyzed by the ML algorithm 412 to "classify" the training data against the target model (or the model's task) and uncover relationships between and among the classified training data. Examples of suitable implementations of the ML algorithms 412 include but are not limited to neural networks, support vector machines (SVMs), logistic regression, decision trees, hidden Markov Models (HMMs), etc. The learning or training performed by the ML algorithms 412 can be supervised, unsupervised, or a hybrid that includes aspects of supervised and unsupervised learning. Supervised learning is when training data is already available and classified/labeled. Unsupervised learning is when training data is not classified/labeled so must be developed through iterations of the classifier 410 and the ML algorithms 412. Unsupervised learning can utilize additional learning/training methods including, for example, clustering, anomaly detection, neural networks, deep learning, and the like.

When the models 416 are sufficiently trained by the ML algorithms 412, the data sources 402 that generate "real world" data are accessed, and the "real world" data is applied to the models 416 to generate usable versions of the results 420. In some embodiments of the invention, the results 420 can be fed back to the classifier 410 and used by the ML algorithms 412 as additional training data for updating and/or refining the models 416.

FIG. 6 depicts a federated learning system 600 that can be used to train machine learning algorithms 412 and models 416 to perform the operations depicted at blocks 304, 318 of the methodology 300 (shown in FIG. 3). As shown, the federated learning system 600 includes an aggregation server 602 communicatively coupled to servers and data repositories for various data owners. Data Owner A maintains Server A and Data A (or data repository A); Data Owner B maintains Server B and Data B (or data repository B); and Data Owner C maintains Server C and Data C (or data repository C). In some embodiments of the invention, the Data Owners A-C are individual sites (e.g., site 204 shown in FIG. 2) that utilize a controller (e.g., controller 110, 110A shown in FIGS. 1 and 2) to implement the methodology 300 (shown in FIG. 3) but are each a separate entity/site at a separate physical location.

The federated learning system 600 can implement any type of federated learning. In general, federated learning is a process of computing a common or global ML model by using input from several locally resident ML models that have been trained using private and locally held data. In some embodiments of the invention, the federated learning process implemented by the federated learning system 600 includes the aggregation server 602 generating an initial version of a global or common ML model and broadcasting it to each of the Servers A-C. Each of the Servers A-C, includes training data and test data. Each of the Servers A-C uses its local test data to train its own local ML model in a privacy-preserving way (to avoid leakage of sensitive inferences about its data) and sends parameters of its local ML model to the aggregation server 602, which collects the parameters of the various ML models from the Servers A-C, uses them to calculate updated parameters for the global ML model, and sends the global ML model parameters back to the Servers A-C for a new round of local ML model training based on the global ML model parameters. After several rounds of continuously updating the global ML model in this fashion, a desired model performance level is reached. The aggregation server 602 then shares this global ML model with each of the Servers A-C for use on each of the Server's private and locally held data.

FIG. 7 illustrates an example of a computer system 700 that can be used to implement the controller 120 described herein. The computer system 700 includes an exemplary computing device ("computer") 702 configured for performing various aspects of the content-based semantic monitoring operations described herein in accordance embodiments of the invention. In addition to computer 702, exemplary computer system 700 includes network 714, which connects computer 702 to additional systems (not depicted) and can include one or more wide area networks (WANs) and/or local area networks (LANs) such as the Internet, intranet(s), and/or wireless communication network(s). Computer 702 and additional system are in communication via network 714, e.g., to communicate data between them.

Exemplary computer 702 includes processor cores 704, main memory ("memory") 710, and input/output component(s) 712, which are in communication via bus 703. Processor cores 704 includes cache memory ("cache") 706 and controls 708, which include branch prediction structures and associated search, hit, detect and update logic, which will be described in more detail below. Cache 706 can include multiple cache levels (not depicted) that are on or off-chip from processor 704. Memory 710 can include various data stored therein, e.g., instructions, software, routines, etc., which, e.g., can be transferred to/from cache 706 by controls 708 for execution by processor 704. Input/output component(s) 712 can include one or more components that facilitate local and/or remote input/output operations to/from computer 702, such as a display, keyboard, modem, network adapter, etc. (not depicted).

Embodiments of the invention described herein can be a system, a method, and/or a computer program product at any possible technical detail level of integration. The computer program product may include a computer readable storage medium (or media) having computer readable program instructions thereon for causing a controller or processor to carry out aspects of the embodiments of the invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Many of the function units of the systems described in this specification have been labeled or described as modules. Embodiments of the invention apply to a wide variety of module implementations. For example, a module can be implemented as a hardware circuit including custom VLSI circuits or gate arrays, off-the-shelf semiconductors such as logic chips, transistors, or other discrete components. A module can also be implemented in programmable hardware devices such as field programmable gate arrays, programmable array logic, programmable logic devices or the like. Modules can also be implemented in software for execution by various types of processors. An identified module of executable code can, for instance, include one or more physical or logical blocks of computer instructions which can, for instance, be organized as an object, procedure, or function. Nevertheless, the executables of an identified module need not be physically located together but can include disparate instructions stored in different locations which, when joined logically together, function as the module and achieve the stated purpose for the module.

## Claims

1. A thermostat (206) of a heating, ventilation and air conditioning (HVAC) system (160A), the thermostat comprising a controller (110) operable to perform operations comprising:
receiving an energy budget (112) for a site, the energy budget comprising an allocated maximum total energy usage by energy loads (160) of the site over a predetermined time duration;
generating an energy usage forecast (114) for the energy loads over the predetermined time duration; and
based at least in part on a determination that the energy usage forecast exceeds the energy budget, generating an energy usage reduction plan (118);
wherein the energy usage reduction plan comprises instructions operable to control one or more of the energy loads such that an actual total energy usage by the energy loads over the predetermined time duration does not exceed the energy budget; and
wherein the energy loads include the HVAC system, **characterized in that**
the controller uses the actual energy usage (116) to update the energy usage forecast (114) and perform additional iterations of the energy usage forecast (114) and energy budget (112) comparison to determine whether the energy usage reduction plan (118) is working.

2. The thermostat of claim 1, wherein the operations further comprise monitoring the actual energy usage (116) at the site during the predetermined time duration.

3. The thermostat of any of the preceding claims, wherein the instructions control the one or more of the energy loads to draw energy from a local energy source (190) of the site.

4. The thermostat of any of the preceding claims, wherein the energy usage reduction plan is based at least in part on an occupancy of the site (204).

5. The thermostat of any of the preceding claims, wherein the energy usage reduction plan is based at least in part on an assessment of a comfort level of occupants of the site.

6. The thermostat of any of the preceding claims, wherein the energy usage reduction plan is based at least in part on local site information selected from the group consisting of:
a size of the site;
a forecasted weather condition (170A) at the site;
a capacity of at least one of the energy loads;
a usage schedule of the at least one of the energy loads;
a temperature set point of the thermostat operable to control the at least one of the energy loads; and
one or more user constraints.

7. The thermostat of any of the preceding claims, wherein the controller is operable to utilize a machine learning algorithm that includes a machine learning model of the site and the energy loads; and/or
wherein the machine learning algorithm (412) is operable to generate the energy usage forecast and the energy usage reduction plan.

8. The thermostat of any of the preceding claims, wherein:
the controller is a member of a federated learning system (600); and
the machine learning model is trained using the federated learning system.

9. A method of operating a controller (110) of a thermostat (206) of a heating, ventilation and air conditioning (HVAC) system (160A), wherein the method operates the controller to:
receive an energy budget (112) for a site, the energy budget comprising an allocated maximum total energy usage by energy loads (160) of the site over a predetermined time duration;
generate an energy usage forecast (114) for the energy loads over the predetermined time duration; and
based at least in part on a determination that the energy usage forecast exceeds the energy budget, generate an energy usage reduction plan (118);
wherein the energy usage reduction plan comprises instructions operable to control one or more of the energy loads such that an actual total energy usage by the energy loads over the predetermined time duration does not exceed the energy budget; and
wherein the energy loads include the HVAC system, **characterized in that**
the method operates the controller to use the actual energy usage (116) to update the energy usage forecast (114) and perform additional iterations of the energy usage forecast (114) and energy budget (112) comparison to determine whether the energy usage reduction plan (118) is working.

10. The method of claim 9 further comprising operating the controller to monitor the actual energy usage (116) at the site during the predetermined time duration.

11. The method of any one of claims 9 and 10, wherein the instructions control the one or more of the energy loads to draw energy from a local energy source of the site (204).

12. The method of any one of claims 9 to 11, wherein the energy usage reduction plan is based at least in part on an occupancy of the site; and/or
wherein the energy usage reduction plan is based at least in part on an assessment of a comfort level of occupants of the site.

13. The method of any one of claims 9 to 12, wherein the energy usage reduction plan is based at least in part on local site information selected from the group consisting of:
a size of the site;
a forecasted weather condition (170A) at the site;
a capacity of at least one of the energy loads;
a usage schedule of the at least one of the energy loads;
a temperature set point of a thermostat operable to control the at least one of the energy loads; and
one or more user constraints.

14. The method of any one of claims 9 to 13, wherein the controller is operable to utilize a machine learning algorithm that includes a machine learning model of the site and the energy loads; and/or
wherein the machine learning algorithm (412) is operable to generate the energy usage forecast and the energy usage reduction plan.

15. The method of any one of claims 9 to 14, wherein:
the controller is a member of a federated learning system (600); and
the machine learning model is trained using the federated learning system.

## Patentansprüche

1. Thermostat (206) eines Heizungs-, Lüftungs- und Klimaanlagen-(HVAC-)Systems (160A), wobei der Thermostat eine Steuerung (110) umfasst, der betreibbar ist, um Vorgänge durchzuführen, umfassend:
Empfangen eines Energiebudgets (112) für einen Standort, wobei das Energiebudget einen zugewiesenen maximalen Gesamtenergieverbrauch durch Energielasten (160) des Standorts über eine vorbestimmte Zeitdauer umfasst;
Erzeugen einer Energieverbrauchsprognose (114) für die Energielasten über die vorbestimmte Zeitdauer; und
Erzeugen eines Plans zur Verringerung des Energieverbrauchs (118) mindestens teilweise basierend auf einer Bestimmung, dass die Energieverbrauchsprognose das Energiebudget überschreitet;
wobei der Plan zur Verringerung des Energieverbrauchs Anweisungen umfasst, die betreibbar sind, um eine oder mehrere der Energielasten derart zu steuern, dass ein tatsächlicher Gesamtenergieverbrauch durch die Energielasten über die vorbestimmte Zeitdauer das Energiebudget nicht überschreitet; und
wobei die Energielasten das HVAC-System beinhalten, **dadurch gekennzeichnet, dass**
die Steuerung den tatsächlichen Energieverbrauch (116) verwendet, um die Energieverbrauchsprognose (114) zu aktualisieren und weitere Iterationen des Vergleichs zwischen der Energieverbrauchsprognose (114) und dem Energiebudget (112) durchzuführen, um zu bestimmen, ob der Plan zur Verringerung des Energieverbrauchs (118) funktioniert.

2. Thermostat nach Anspruch 1, wobei die Vorgänge ferner ein Überwachen des tatsächlichen Energieverbrauchs (116) an dem Standort während der vorbestimmten Zeitdauer umfassen.

3. Thermostat nach einem der vorhergehenden Ansprüche, wobei die Anweisungen die eine oder mehreren der Energielasten steuern, um Energie von einer lokalen Energiequelle (190) des Standorts zu beziehen.

4. Thermostat nach einem der vorhergehenden Ansprüche, wobei der Plan zur Verringerung des Energieverbrauchs mindestens teilweise auf einer Belegung des Standorts (204) basiert.

5. Thermostat nach einem der vorhergehenden Ansprüche, wobei der Plan zur Verringerung des Energieverbrauchs mindestens teilweise auf einer Bewertung eines Komfortniveaus von Bewohnern des Standorts basiert.

6. Thermostat nach einem der vorhergehenden Ansprüche, wobei der Plan zur Verringerung des Energieverbrauchs mindestens teilweise auf lokalen Standortinformationen basiert, die aus der Gruppe ausgewählt sind, bestehend aus:
einer Größe des Standorts;
einer prognostizierten Wetterlage (170A) an dem Standort;
einer Kapazität von mindestens einer der Energielasten;
einem Verbrauchszeitplan von der mindestens einen der Energielasten;
einem Temperatursollwert des Thermostats, der betreibbar ist, um die mindestens eine der Energielasten zu steuern; und
einer oder mehreren Benutzereinschränkungen.

7. Thermostat nach einem der vorhergehenden Ansprüche, wobei die Steuerung betreibbar ist, um einen maschinellen Lernalgorithmus zu verwenden, der ein maschinelles Lernmodell des Standorts und der Energielasten beinhaltet; und/oder
wobei der maschinelle Lernalgorithmus (412) betreibbar ist, um die Energieverbrauchsprognose und den Plan zur Verringerung des Energieverbrauchs zu erzeugen.

8. Thermostat nach einem der vorhergehenden Ansprüche, wobei:
die Steuerung ein Mitglied eines föderierten Lernsystems (600) ist; und
das maschinelle Lernmodell mithilfe des föderalen Lernsystems trainiert wird.

9. Verfahren zum Betreiben einer Steuerung (110) eines Thermostats (206) eines Heizungs-, Lüftungs- und Klimaanlagen-(HVAC-)Systems (160A), wobei das Verfahren die Steuerung betreibt, um:
ein Energiebudget (112) für einen Standort zu empfangen, wobei das Energiebudget einen zugewiesenen maximalen Gesamtenergieverbrauch durch Energielasten (160) des Standorts über eine vorbestimmte Zeitdauer umfasst;
eine Energieverbrauchsprognose (114) für die Energielasten über die vorbestimmte Zeitdauer zu erzeugen; und
einen Plan zur Verringerung des Energieverbrauchs (118) mindestens teilweise basierend auf einer Bestimmung zu erzeugen, dass die Energieverbrauchsprognose das Energiebudget überschreitet;
wobei der Plan zur Verringerung des Energieverbrauchs Anweisungen umfasst, die betreibbar sind, um eine oder mehrere der Energielasten derart zu steuern, dass ein tatsächlicher Gesamtenergieverbrauch durch die Energielasten über die vorbestimmte Zeitdauer das Energiebudget nicht überschreitet; und
wobei die Energielasten das HVAC-System beinhalten, **dadurch gekennzeichnet, dass**
das Verfahren die Steuerung betreibt, um den tatsächlichen Energieverbrauch (116) zu verwenden, um die Energieverbrauchsprognose (114) zu aktualisieren und weitere Iterationen des Vergleichs zwischen der Energieverbrauchsprognose (114) und dem Energiebudget (112) durchzuführen, um zu bestimmen, ob der Plan zur Verringerung des Energieverbrauchs (118) funktioniert.

10. Verfahren nach Anspruch 9, ferner umfassend ein Betreiben der Steuerung, um den tatsächlichen Energieverbrauch (116) an dem Standort während der vorbestimmten Zeitdauer zu überwachen.

11. Verfahren nach einem der Ansprüche 9 und 10, wobei die Anweisungen die eine oder mehreren der Energielasten steuern, um Energie aus einer lokalen Energiequelle des Standorts (204) zu beziehen.

12. Verfahren nach einem der Ansprüche 9 bis 11, wobei der Plan zur Verringerung des Energieverbrauchs mindestens teilweise auf einer Bewohnung des Standorts basiert; und/oder wobei der Plan zur Verringerung des Energieverbrauchs mindestens teilweise auf einer Bewertung eines Komfortniveaus von Bewohnern des Standorts basiert.

13. Verfahren einem der Ansprüche 9 bis 12, wobei der Plan zur Verringerung des Energieverbrauchs mindestens teilweise auf lokalen Standortinformationen basiert, die aus der Gruppe ausgewählt sind, bestehend aus:
einer Größe des Standorts;
einer prognostizierten Wetterlage (170A) an dem Standort;
einer Kapazität von mindestens einer der Energielasten;
einem Verbrauchszeitplan von der mindestens einen der Energielasten;
einem Temperatursollwert eines Thermostats, der betreibbar ist,
um die mindestens eine der Energielasten zu steuern; und
einer oder mehreren Benutzereinschränkungen.

14. Verfahren nach einem der Ansprüche 9 bis 13, wobei die Steuerung betreibbar ist, um einen maschinellen Lernalgorithmus zu verwenden, der ein maschinelles Lernmodell des Standorts und der Energielasten beinhaltet; und/oder
wobei der maschinelle Lernalgorithmus (412) betreibbar ist, um die Energieverbrauchsprognose und den Plan zur Verringerung des Energieverbrauchs zu erzeugen.

15. Verfahren nach einem der Ansprüche 9 bis 14, wobei:
die Steuerung ein Mitglied eines föderierten Lernsystems (600) ist; und
das maschinelle Lernmodell mithilfe des föderalen Lernsystems trainiert wird.

## Revendications

1. Thermostat (206) d'un système de chauffage, de ventilation et de climatisation (CVC) (160A), le thermostat comprenant un contrôleur (110) apte à exécuter des opérations consistant à :
recevoir un budget énergétique (112) pour un site, le budget énergétique comprenant une consommation énergétique totale maximale allouée par des charges énergétiques (160) du site sur une durée prédéterminée ;
générer une prévision de consommation énergétique (114) pour les charges énergétiques sur la durée prédéterminée ; et
sur la base, au moins en partie, d'une détermination selon laquelle la prévision de consommation énergétique dépasse le budget énergétique, générer un plan de réduction de consommation énergétique (118) ;
dans lequel le plan de réduction de consommation énergétique comprend des instructions aptes à commander une ou plusieurs des charges énergétiques de telle sorte qu'une consommation énergétique totale réelle par les charges énergétiques sur la durée prédéterminée ne dépasse pas le budget énergétique ; et
dans lequel les charges énergétiques comprennent le système CVC,
**caractérisé en ce que**
le contrôleur utilise la consommation énergétique réelle (116) pour mettre à jour la prévision de consommation énergétique (114) et effectuer des itérations supplémentaires de la comparaison entre la prévision de consommation énergétique (114) et le budget énergétique (112) afin de déterminer si le plan de réduction de consommation énergétique (118) fonctionne.

2. Thermostat selon la revendication 1, dans lequel les opérations comprennent en outre la surveillance de la consommation énergétique réelle (116) au niveau du site pendant la durée prédéterminée.

3. Thermostat selon l'une quelconque des revendications précédentes, dans lequel les instructions commandent la ou les charges énergétiques à prélever de l'énergie à partir d'une source d'énergie locale (190) du site.

4. Thermostat selon l'une quelconque des revendications précédentes, dans lequel le plan de réduction de consommation énergétique est basé au moins en partie sur un taux d'occupation du site (204).

5. Thermostat selon l'une quelconque des revendications précédentes, dans lequel le plan de réduction de consommation énergétique est basé au moins en partie sur une évaluation d'un niveau de confort des occupants du site.

6. Thermostat selon l'une quelconque des revendications précédentes, dans lequel le plan de réduction de consommation énergétique est basé au moins en partie sur des informations locales relatives au site sélectionnées dans le groupe comprenant :
une taille du site ;
une condition météorologique prévue (170A) au niveau du site ;
une capacité d'au moins l'une des charges énergétiques ;
un programme d'utilisation de l'au moins une des charges énergétiques ;
un point de consigne de température du thermostat apte à commander l'au moins une des charges énergétiques ; et
une ou plusieurs contraintes d'utilisateur.

7. Thermostat selon l'une quelconque des revendications précédentes, dans lequel le contrôleur est apte à utiliser un algorithme d'apprentissage automatique comprenant un modèle d'apprentissage automatique du site et des charges énergétiques ; et/ou
dans lequel l'algorithme d'apprentissage automatique (412) est apte à générer la prévision de consommation énergétique et le plan de réduction de consommation énergétique.

8. Thermostat selon l'une quelconque des revendications précédentes, dans lequel :
le contrôleur est un membre d'un système d'apprentissage fédéré (600) ; et
le modèle d'apprentissage automatique est entraîné à l'aide du système d'apprentissage fédéré.

9. Procédé de commande d'un contrôleur (110) d'un thermostat (206) d'un système de chauffage, de ventilation et de climatisation (CVC) (160A), dans lequel le procédé commande le contrôleur pour :
recevoir un budget énergétique (112) pour un site, le budget énergétique comprenant une consommation énergétique totale maximale allouée par des charges énergétiques (160) du site sur une durée prédéterminée ;
générer une prévision de consommation énergétique (114) pour les charges énergétiques sur la durée prédéterminée ; et
sur la base, au moins en partie, d'une détermination selon laquelle la prévision de consommation énergétique dépasse le budget énergétique, générer un plan de réduction de consommation énergétique (118) ;
dans lequel le plan de réduction de consommation énergétique comprend des instructions aptes à commander une ou plusieurs des charges énergétiques de sorte qu'une consommation énergétique totale réelle par les charges énergétiques sur la durée prédéterminée ne dépasse pas le budget énergétique ; et
dans lequel les charges énergétiques comprennent le système CVC,
**caractérisé en ce que**
le procédé commande le contrôleur pour utiliser la consommation énergétique réelle (116) afin de mettre à jour la prévision de consommation énergétique (114) et effectuer des itérations supplémentaires de la comparaison entre la prévision de consommation énergétique (114) et le budget énergétique (112) afin de déterminer si le plan de réduction de consommation énergétique (118) fonctionne.

10. Procédé selon la revendication 9, comprenant en outre le fait de commander le contrôleur pour surveiller la consommation énergétique réelle (116) au niveau du site pendant la durée prédéterminée.

11. Procédé selon l'une quelconque des revendications 9 ou 10, dans lequel les instructions commandent la ou les charges énergétiques à prélever de l'énergie à partir d'une source d'énergie locale du site (204).

12. Procédé selon l'une quelconque des revendications 9 à 11, dans lequel le plan de réduction de consommation énergétique est basé au moins en partie sur un taux d'occupation du site ; et/ou dans lequel le plan de réduction de consommation énergétique est basé au moins en partie sur une évaluation d'un niveau de confort des occupants du site.

13. Procédé selon l'une quelconque des revendications 9 à 12, dans lequel le plan de réduction de consommation énergétique est basé au moins en partie sur des informations locales relatives au site sélectionnées dans le groupe comprenant :
une taille du site ;
une condition météorologique prévue (170A) au niveau du site ;
une capacité d'au moins l'une des charges énergétiques ;
un programme d'utilisation de l'au moins une des charges énergétiques ;
un point de consigne de température d'un thermostat apte à commander l'au moins une des charges énergétiques ; et
une ou plusieurs contraintes d'utilisateur.

14. Procédé selon l'une quelconque des revendications 9 à 13, dans lequel le contrôleur est apte à utiliser un algorithme d'apprentissage automatique comprenant un modèle d'apprentissage automatique du site et des charges énergétiques ; et/ou
dans lequel l'algorithme d'apprentissage automatique (412) est apte à générer la prévision de consommation énergétique et le plan de réduction de consommation énergétique.

15. Procédé selon l'une quelconque des revendications 9 à 14, dans lequel :
le contrôleur est un membre d'un système d'apprentissage fédéré (600) ; et
le modèle d'apprentissage automatique est entraîné à l'aide du système d'apprentissage fédéré.
